# EUROPÄISCHE PATENTSCHRIFT

(11) **EP 2 394 103 B1**
(45) Veröffentlichungstag und Bekanntmachung des Hinweises auf die Patenterteilung: **11.01.2017**
(21) Anmeldenummer: 10700820.3
(22) Anmeldetag: 20.01.2010
(51) Int. Cl.: F24F 12/00, E04B 5/48, F24D 3/14, F24F 7/08, F24F 5/00

(54) **BAUWERK UND VERFAHREN ZUM TEMPERIEREN UND BELÜFTEN DES BAUWERKS**
BUILDING AND METHOD FOR TEMPERING AND VENTILATING OF THE BUILDING
IMMEUBLE ET MÉTHODE POUR CHAMBRER ET VENTILER L'IMMEUBLE

(30) Priorität: 05.02.2009 DE 102009008801
(43) Veröffentlichungstag der Anmeldung: 14.12.2011
(73) Patentinhaber: Bam Deutschland AG, 70191 Stuttgart (DE)
(72) Erfinder: SIMON, Holger, 72813 St. Johann (DE)
(74) Vertreter: DREISS Patentanwälte PartG mbB
(86) Internationale Anmeldenummer: PCT/EP2010/000318
(87) Internationale Veröffentlichungsnummer: WO 2010/089027

(56) Entgegenhaltungen:
- EP-A1- 1 167 889
- DE-U1- 29 611 048
- FR-A1- 2 662 785

## Beschreibung

Die Erfindung betrifft ein Bauwerk, insbesondere Bürogebäude, Wohngebäude oder öffentliches Gebäude, mit Betondecken, das zur Beheizung und zur Kühlung seiner Innenräume ein in die Betondecken integriertes wasserbasiertes Kühl/Heizsystem als Kreislaufsystem aufweist.

Man spricht hier von einem Kühl-/Heizsystem in Form von wassergekühlten thermisch aktivierten Decken (wassergekühlte TAD), was grundsätzlich bekannt ist. Die Wärmezufuhr zur Beheizung der Innenräume des Gebäudes wird also nicht durch konventionelle Heizkörper, sondern durch Wärmeabgabe im Wege der Konvektion und Wärmestrahlung durch die temperierte Betondecke bereitgestellt. Ebenso wirkt die Betondecke im Kühlungsfall als Wärmesenke zur Aufnahme und Abfuhr von Wärme aus den Innenräumen. Die Benutzung eines in die Betondecken eingegossenen wasserbasierten Kühl-/Heizsystems hat den großen Vorteil, dass durch langsames, jedoch kontinuierliches Durchströmen der Betondecken mit Wasser eine sehr effektive Temperierung der Betondecken und des Bauwerks erreicht werden kann, da Wasser als Beispiel eines flüssigen Kühlmediums eine hohe spezifische Wärmekapazität und daher ein hohes Wärme- bzw. Kältetransportvermögen sowie zu fast allen Materialien einen hervorragenden Wärmeübertrittswiderstand aufweist. Aus diesem Grund kann mit geringen Strömungsgeschwindigkeiten gearbeitet werden. Außerdem erweist es sich als besonders vorteilhaft, dass bei entsprechender Auslegung des wasserbasierten Kühl-/Heizungssystems in den Betondecken die Vorlauftemperatur nur wenige Grad Celsius oberhalb (beim Heizen) bzw. unterhalb (beim Kühlen) der angestrebten Raumtemperatur zu liegen braucht. Dies ist darauf zurückzuführen, dass die Decken naturgemäß die zu temperierenden Innenräume vollständig überfangen, so dass ein Wärmeübergang in beide Richtungen unproblematisch möglich ist. Wenn vorstehend von einem wasserbasierten Kühl/Heizsystem die Rede ist, so steht der Begriff "Wasser" hier exemplarisch für ein flüssiges Wärmetauschermedium, obschon Wasser bevorzugt ist.

Aufgrund von gewissen, in Verbindung mit wasserbasierten thermisch aktivierten Decken mitunter auftretenden Kondensationsproblemen infolge Unterschreitung des Taupunkts an kalten Flächen wurde schon häufig der Vorschlag unterbreitet, von wasserbasierten Kühl-/Heizungssystemen in Betondecken wieder abzurücken und stattdessen auf konventionelle Systeme zurückzugreifen. Insbesondere wurde mit DE 196 09 641 D2 der Vorschlag unterbreitet, eine Kühlung der Betondecken nicht durch Wasser, sondern durch Luft vorzusehen, die dann auch als Frischluft dem Gebäude zugeführt werden kann. Mit diesem System ist jedoch zum einen eine Heizung des Bauwerks nicht sinnvoll möglich und zum anderen muss aufgrund der geringen Kühlkapazität von Luft eine große Anzahl von Strömungswegen je Fläche der Betondecke unter Verwendung einer thermisch gut leitenden Verrohrung vorgesehen werden.

Der vorliegenden Erfindung liegt die Aufgabe zugrunde, ein Bauwerk im Sinne eines Gebäudes vorzuschlagen, bei dem sich zu allen Jahreszeiten eine betriebswirtschaftlich kostengünstige, aber auch ökologische Gebäudebewirtschaftung erreichen lässt.

Diese Aufgabe wird erfindungsgemäß durch ein Bauwerk mit den Merkmalen des Anspruchs 1 und durch ein Verfahren mit den Merkmalen des Anspruchs 12 gelöst. Bevorzugte Ausführungsformen sind in den Unteransprüchen definiert.

Es wird also erfindungsgemäß vorgeschlagen, zur Beheizung und Kühlung der Innenräume ein in die Betondecken integriertes wasserbasiertes Kühl-/Heizsystem als Kreislaufsystem vorzusehen, da auf diese Weise durchweg zur Beheizung und Kühlung des Gebäudes im Bereich eines Niedrigtemperatursystems gearbeitet werden kann. Erfindungsgemäß wird weiter vorgeschlagen, die Frischluftzufuhr in die wassergekühlte oder wassererwärmte thermisch aktivierte Decke in der beanspruchten Weise zu integrieren. Dadurch, dass die zuzuführende Frischluft durch thermischen Kontakt mit der abzuführenden Abluft in einer Wärmetauschereinrichtung vortemperiert wird, genügt ein in die Betondecke des jeweiligen Innenraums einbetonierter wenigstens 4 m langer Abschnitt des zuluftführenden Teils des Rohrsystems, um die dem Innenraum zuzuführende Frischluft im Wesentlichen auf die Temperatur der wassertemperierten Betondecke zu bringen, bevor sie in den Innenraum eingeleitet wird. Unter der Temperatur der wassertemperierten Betondecke wird ein Temperaturwert verstanden, der notwendigerweise zwischen der Temperatur des in der Decke geführten Wassers und der Deckenabstrahlungstemperatur liegt, wobei unter dem Begriff "Deckenabstrahlungstemperatur" die Temperatur der Decke an ihrer dem Innenraum zugewandten Oberfläche verstanden wird. Zwischen der wasserführenden Verrohrung und der Oberfläche der Decke stellt sich also ein variierendes Kerntemperaturprofil innerhalb des Betons ein. Bevorzugtermaßen wird die dem Innenraum zuzuführende Frischluft auf die Deckenabstrahlungstemperatur oder nahe an die Deckenabstrahlungstemperatur gebracht; sie kann aber auch etwas hiervon abweichen und innerhalb des besagten Kerntemperaturprofils zwischen Wassertemperatur und Deckenabstrahlungstemperatur liegen.

Auf die Weise können einerseits den vorgeschriebenen Luftwechselraten nach DIN EN 13779 (Stand September 2007) bzw. nach DIN 51251 (Stand November 2007) entsprechende Luftwechselraten erreicht werden, und andererseits erweist sich die hierdurch erzielbare Frischluftzufuhr für den unproblematischen Betrieb einer wasserbasierten thermisch aktivierten Decke als hinreichend. Es sei noch darauf hingewiesen, dass unter Frischluft im vorstehend verwandten Sinn 100% frische Außenluft, also keine Mischluft, verstanden wird.

Das erfindungsgemäße Konzept lässt sich grundsätzlich für an sich beliebige Gebäude und Nutzflächen innerhalb von Gebäuden einsetzen, und zwar sowohl bei fensterlosen Gebäuden als auch bei Gebäuden mit öffenbaren Fenstern. Im letzten Fall kann vorgesehen werden, dass bei Öffnen der Fenster die Frischluftzufuhr in den betreffenden Raum, nicht jedoch das in die Betondecke integrierte wasserbasierte Kühl-/Heizsystem abgeschaltet wird.

Im Hinblick auf die Auslegung des luftführenden Rohrsystems hat es sich als hinreichend erwiesen, wenn die Rohrlänge der in die Betondecke einbetonierten Abschnitte des zuluftführenden Teils des Rohrsystems je Fläche der Betondecke höchstens 50 m / 100 m², insbesondere 20 - 50 m / 100 m², insbesondere 20 - 40 m / 100 m², insbesondere 20 - 30 m / 100 m², insbesondere 20 - 25 m / 100 m² beträgt. Die letztgenannte Rohrlänge je Fläche von 20 bis 25 m/100 m² ist bei Verwendung von einbetonierten Rohrabschnitten mit einem Durchmesser von nur 90 mm hinreichend, um einen 1,5-fachen Luftwechsel des Innenraums je Stunde zu erreichen, wenn man eine lichte Raumhöhe von 3 m berücksichtigt.

Es hat sich des Weiteren als hinreichend erwiesen, wenn der wenigstens 4 m lange, in die Betondecke des jeweiligen Innenraums einbetonierte Abschnitt des zuluftführenden Teils des Rohrsystems von einem im Wesentlichen glatten Kunststoffrohr gebildet ist. Infolge der Vortemperierung der zuzuführenden Frischluft in der Wärmetauschereinrichtung müssen für die erstrebte Angleichung der Temperatur der zuzuführenden Frischluft an die Temperatur der wassergekühlten Betondecke keine besonderen Maßnahmen ergriffen werden, sondern es kann auf handelsübliche Kunststoffohre zurückgegriffen werden.

Hierbei kann ein Außendurchmesser des wenigstens 4 m langen in die Betondecke des jeweiligen Innenraums einbetonierten Abschnitts des zuluftführenden Teils des Rohrsystems 80 - 150 mm, insbesondere 100 - 150 mm, insbesondere 80 - 130 mm, insbesondere 80 - 120 mm, insbesondere 90 - 120 mm, insbesondere 100 - 120 mm betragen. Der das Strömungsvolumen definierende Innendurchmesser ist dann bei Verwendung handelsüblicher Kunststoffrohre etwa 10 - 20 mm geringer.

Es wurde bereits darauf hingewiesen, dass die Länge des in die Betondecke des jeweiligen Innenraums einbetonierten Abschnitts des zuluftführenden Teils des Rohrsystems lediglich wenigstens 4 m zu betragen braucht; in Weiterbildung der Erfindung wird in vorteilhafter Weise mit Abschnittslängen von 4 - 8 m, insbesondere 4 bis 7 m, insbesondere 4 bis 6 m und weiter insbesondere 4 bis 5 m gearbeitet. In Fällen größerer Räume, insbesondere Besprechungsräumen, Klassenzimmern oder dergleichen kann es sich allein aus Gründen der Raumgröße ergeben, dass einzelne einbetonierte Abschnitte demgegenüber länger ausgebildet sind, was aber lediglich aus Gründen der Ansteuerung entfernterer Ausströmorte veranlasst ist und nicht aus Gründen der Temperierung der zuzuführenden Frischluft.

In diesem Zusammenhang sei auch darauf hingewiesen, dass es sich bei dem erfindungsgemäßen Konzept als vorteilhaft erweist, wenn ein jeweiliger in die Betondecke einbetonierter Abschnitt des zuluftführenden Teils des Rohrsystems einen einzigen Kanal für die Zuführung der Frischluft bildet. Es sind also ausgehend von einem im jeweiligen Geschossbereich üblicherweise horizontal geführten Zuluftkanal in einem abgehängten Deckenbereich (also nicht einbetoniert) jeweils einzelne zu den betreffenden Innenräumen führende Stichkanäle vorgesehen, welche die erwähnten in die Betondecke einbetonierten Abschnitte des zuluftführenden Teils des Rohrsystems bilden, und zwar jeweils in Form eines einzigen nicht verzweigten zu einer Zulufteinströmöffnung in den betreffenden Innenraum führenden Kanals.

Es erweist sich auch als vorteilhaft, wenn einem jeweiligen in die Betondecke einbetonierten Abschnitt des zuluftführenden Teils des Rohrsystems eine Volumenstromregelvorrichtung zugeordnet ist oder wenn einer Gruppe solcher Abschnitte, die einem Bereich, insbesondere einem Geschoss oder demselben Raum, zugeordnet sind, eine Volumenstromregelvorrichtung zugeordnet ist. Bei einer solchen Volumenstromregelvorrichtung handelt es sich typischerweise um Lüftungsgeräte, welche die zuzuführende Zuluft beispielsweise ausgehend von einem vertikalen Steigschacht oder ausgehend von einem vorstehend erwähnten horizontal verlaufenden Zuluftkanal im abgehängten Deckenbereich eines Geschosses den schlussendlichen Zuführkanälen zuleiten.

Weiter erweist es sich als vorteilhaft, wenn am innenraumseitigen Ende der einbetonierten Abschnitte ein Decken-Drall-Durchlass oder Radialdurchlass vorgesehen ist. Auf diese Weise lassen sich Zuluft-Austrittsgeschwindigkeiten von weniger als 1,5 m/s erreichen. Schon bereits ca. 20 bis 30 cm unterhalb der Oberfläche der thermisch aktivierten Decke ergibt sich eine als zugfrei empfundene Luftströmungsgeschwindigkeit von lediglich 0,1 bis 0,2 m/s. Die erwähnte Wärmetauschereinrichtung, die vorzugsweise an zentraler Stelle innerhalb des Gebäudes angeordnet ist, umfasst vorteilhafterweise eine Plattenwärmetauschereinheit. Des Weiteren können im Strömungsweg der zuzuführenden Zuluft Filtereinrichtungen und Schalldämpfervorrichtungen angeordnet sein. Zusätzlich können Entfeuchtungs- bzw. Befeuchtungsvorrichtungen in dem zuluftführenden Teil des Rohrsystems bzw. in dem abluftführenden Teil des Rohrsystems vorgesehen werden.

Als besonders vorteilhaft erweist es sich, wenn im abluftseitigen Teil des Rohrsystems und der Wärmetauschereinrichtung vorgeordnet eine als adiabatisches Rückkühlwerk arbeitende Befeuchtungseinrichtung für die Abluft vorgesehen ist, die im Kühlungsfall aktivierbar ist und mittels derer die Abluft kühlbar ist, bevor sie der Wärmetauschereinrichtung zugeführt wird. Auf diese Weise kann auch im Kühlbetrieb (Sommer) ohne zusätzliche konventionelle Kältemaschinen die Temperierung der Frischluftzufuhr ausgeführt werden. Dies erfolgt dann dadurch, dass die im Kühlbetrieb (Sommer) aus den Innenräumen des Gebäudes abgeführte Abluft, die solchenfalls (im Kühlbetrieb) einige Grad wärmer ist als die Deckentemperatur bzw. die Solltemperatur der dem Innenraum zuzuführenden Frischluft, durch die genannte Befeuchtungseinrichtung mit einem verdüsten Sprühnebel aus Wasser beaufschlagt wird. Durch Verdampfen eines Teils des Sprühnebels entsteht Verdunstungskälte, die der Abluft entzogen wird, so dass die Abluft hierdurch auf Temperaturen unterhalb der Deckentemperatur bzw. der Solltemperatur der den Innenräumen zuzuführenden Frischluft gekühlt wird. Auf diese Weise kann in der nachfolgenden Wärmetauschereinrichtung unter Verwendung der adiabatisch gekühlten Abluft die von außen stammende Frischluft vortemperiert, d. h. vorgekühlt werden. Nach Durchgang durch die Wärmetauschereinrichtung wird die Abluft wie immer in die Umgebung des Gebäudes ausgeblasen. Es versteht sich, dass im Wärmebetrieb (Winter) die aus den Innenräumen entnommene Abluft nicht in der vorstehenden Weise gekühlt oder befeuchtet wird, sondern sie durchströmt direkt die Wärmetauschereinrichtung, um so die kältere Frischluft vorzutemperieren.

Im Hinblick auf eine möglichst ökologische Gebäudebewirtschaftung erweist es sich als vorteilhaft, wenn zur Einstellung der Vorlauftemperatur des Wassers des in die Betondecke integrierten wasserbasierten Kühl/Heizsystems ein adiabatisches Rückkühlwerk, ein Erdkollektor oder Energiepfahl oder eine Wärmepumpe vorgesehen ist. Es erweist sich als vorteilhaft, wenn im Kühlbetrieb die Grundlast des wasserbasierten Kühl-/Heizsystems über ein adiabatisches Rückkühlwerk gedeckt wird, und zwar so lange wie die Kühlleistung über der erforderlichen Kühllast liegt. Zum Wärmetausch wird in diesem Fall vorzugsweise Außenluft verwendet, die wie vorstehend beschrieben durch verdüstes Wasser befeuchtet und dadurch gekühlt wird. Überschreitet die Kühllast die Leistung des Rückkühlwerks oder werden die erforderlichen Temperaturen nicht mehr erreicht, so wird der Überschuss (Spitzenlast) über einen Erdkollektor oder Energiepfahl zur Verfügung gestellt bzw. ganz auf Wärmetausch mit dem Erdkollektor oder Energiepfahl umgestellt. Je nach Auslegung der Kapazität des Erdkollektors kann in Schwachlastzeiten unter Verwendung des Rückkühlwerks auch der Erdkollektor wieder abgekühlt werden. Dies kann im Sommer insbesondere nachts geschehen, wenn die Außenluft kalt genug ist.

Das wasserbasierte Kühl-/Heizsystem für die Temperierung der Decken des Gebäudes ist jedenfalls für einen kontinuierlichen Betrieb auch während der Nacht ausgelegt und konzipiert.

Im Hinblick auf die verfahrensmäßigen Aspekte der vorliegenden Erfindung, d. h. im Hinblick auf die Weiterbildung des erfindungsgemäßen Verfahrens nach Anspruch 12 erweist es sich als vorteilhaft, wenn der Zuluftvolumenstrom in einem in einen jeweiligen Innenraum mündenden Abschnitt des zuluftführenden Teils des Rohrsystems 90 - 300 m³/h, insbesondere 90 - 200 m³/h und weiter insbesondere 90 - 150 m³/h beträgt. Für den Bereich des Zuluftvolumenstroms von 90 - 150 m³/h werden zweckmäßigerweise Rohre mit einem Durchmesser von 90 bis 110 mm verwendet. Für einen demgegenüber höheren Zuluftvolumenstrom werden zweckmäßigerweise Rohre mit einem Durchmesser von 120 bis 150 mm verwendet, damit eine Strömungsgeschwindigkeit der zuzuführenden Zuluft innerhalb der jeweiligen in die Betondecke einbetonierten Abschnitte des zuluftführenden Teils des Rohrsystems < 6 m/s, insbesondere < 5 m/s und weiter insbesondere < 4 m/s verwendet werden kann.

In dem von der luftführenden Verrohrung separaten wasserbasierten Kühl-/Heizsystem wird vorteilhafterweise eine Strömungsgeschwindigkeit des Wassers innerhalb des in die Betondecken integrierten wasserbasierten Kühl-/Heizsystems von 0,1 - 0,7 m/s eingesetzt. Die in die Betondecke integrierten Leitungen haben hierfür einen Innendurchmesser von beispielsweise ca. 15 - 25 mm; sie können in einem Abstand zueinander von beispielsweise ca. 15 - 30 cm vorgesehen sein. Eine zweckmäßige Flüssigkeitsmengenströmung beträgt ca. 270 - 330 l/h.

Es erweist sich als besonders vorteilhaft, dass die Vorlauftemperatur des Wassers des in die Betondecke integrierten wasserbasierten Kühl/Heizsystems bei allen typischerweise auftretenden Außentemperaturen (von -30°C bis +35°C) zwischen 15°C und 40°, insbesondere zwischen 17°C und 35°C, insbesondere zwischen 17°C und 33°C liegt. Bei der Praktizierung der vorliegenden Erfindung kann also durchgehend eine Niedrigtemperaturwasserführung innerhalb des in die Betondecke integrierten wasserbasierten Kühl-/Heizsystems praktiziert werden.

Beim Kühlbetrieb erweist es sich als vorteilhaft, dass die Vorlauftemperatur des Wassers des in die Betondecke integrierten wasserbasierten Kühl/Heizsystems bei Außentemperaturen ab 15°C zwischen 15°C und 22°, insbesondere zwischen 15°C und 20°C, insbesondere zwischen 17°C und 20°C liegt. Es sei aber darauf hingewiesen, dass aufgrund der inneren Wärmelast typischer Gebäude, insbesondere Bürogebäude, durch Personen, Beleuchtung und Rechner oder Wärmeeinstrahlung die hierbei erzeugte Wärmeleistung so hoch ist, dass bereits bei Außentemperaturen von über ca. 5°C von einem Heizbetrieb in den Kühlbetrieb gewechselt wird, also die Vorlauftemperatur in den genannten Bereich von 15 bis 22°C abgesenkt wird.

Als weiter besonders vorteilhaft erweist es sich, dass die Rücklauftemperatur des Wassers bei Austritt aus den Betondecken und Rückführung zu einer Heizzentrale höchstens 5°C, insbesondere höchstens 4°C und weiter insbesondere höchstens 3°C von der in der Heizzentrale wieder einzustellenden Vorlauftemperatur abweicht. Somit folgt, dass in der Heizzentrale des Gebäudes das zur Heizung und Kühlung verwandte Medium Wasser des wasserbasierten Heiz-/Kühlsystems lediglich um ± 5°C temperiert zu werden braucht, was unproblematisch durch vorhandene natürliche Kühlkapazität bzw. Heizkapazität unter Einsatz der vorausgehend genannten Mittel, nämlich Wärmerückgewinnung durch Wärmetauscher, adiabatische Kühlung durch Befeuchten der Abluft oder Außenluft als Wärmetauschermedium, Erdkollektoren, Energiepfähle oder Wärmepumpen zur Verfügung gestellt werden kann. Natürlich können zusätzlich konventionelle Heizeinrichtungen und Kältemaschinen Verwendung finden.

Weiter wird vorgeschlagen, das wasserbasierte Kühl-/Heizsystem so zu betreiben, dass die Deckenabstrahlungstemperatur bei allen Außentemperaturen zwischen 20°C und 25°C gehalten wird. Für einen typischen Heizungsbetrieb im Winter erweist sich eine Deckenabstrahlungstemperatur von ca. 24°C als vorteilhaft, und bei einem Kühlbetrieb im Sommer erweist sich eine Deckenabstrahlungstemperatur von ca. 20,5 bis 21°C als vorteilhaft.

Weitere Merkmale, Einzelheiten und Vorteile der Erfindung ergeben sich aus den beigefügten Patentansprüchen und aus der zeichnerischen Darstellung und nachfolgenden Beschreibung der Erfindung. In der Zeichnung zeigt:
- Figur 1: eine schematische Schnittansicht eines teilweise dargestellten Geschosses eines an sich beliebigen Gebäudes;
- Figuren 2 und 3: in schematischer Aufsicht eine beispielhafte Einteilung eines Geschosses eines Bürogebäudes;
- Figur 4: eine Wärmetauschereinrichtung für die Vortemperierung der dem Gebäude zuzuführenden Frischluft;
- Figur 5: Vorlauf- und Rücklauftemperaturen des wasserbasierten Kühl/Heizsystems.

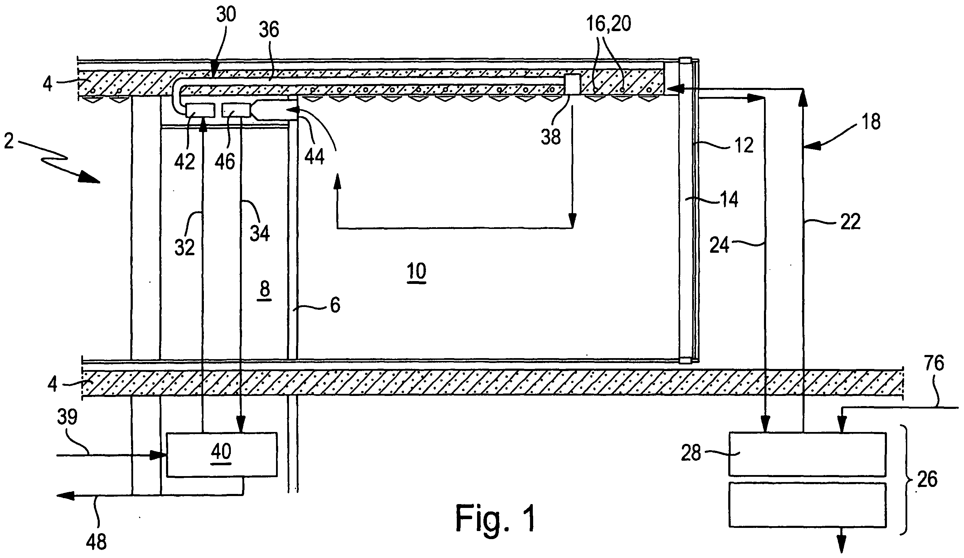

Figur 1 zeigt eine schematische Schnittansicht eines teilweise dargestellten Geschosses eines an sich beliebigen Gebäudes 2 mit Betondecken 4. Es ist eine Wand 6 angedeutet zwischen einem Flur oder einer an sich beliebigen Mittelzone 8 und einem zu temperierenden Innenraum 10 des Gebäudes. Ferner ist eine Fensterfront 12 mit einer schematisch angedeuteten Abschattungseinrichtung 14 dargestellt.

Zur Temperierung des Gebäudes 2, d.h. zur Beheizung und zur Kühlung des Gebäudes ist ein in die Betondecken 4 integriertes wasserbasiertes Kühl-/Heizsystem 16 vorgesehen. Das wasserbasierte Kühl-/Heizsystem 16 umfasst eine wasserführende Verrohrung 18 mit in die jeweilige Betondecke 4 integrierten, d. h. einbetonierten Kühl-/Heizrohren 20. Die wasserführende Verrohrung 18 umfasst einen Vorlauf 22 und einen Rücklauf 24. Die Kühl-/Heizrohre 20 sind im beispielhaft dargestellten Fall mit einem Abstand von ca. 60 bis 80 mm zu der dem jeweiligen Innenraum 10 zugewandten Oberfläche der Betondecke 4 vorgesehen. Sie haben einen beispielhaften Abstand von 20 bis 30 cm voneinander. Das wasserbasierte Kühl-/Heizsystem 16 wird vorzugsweise durchgehend auch bei Nacht betrieben. Es wird mit entsprechend temperiertem Wasser mit verhältnismäßig geringer Strömungsgeschwindigkeit von vorzugsweise 0,1 bis 0,7 m/s im Bereich der einbetonierten Kühl-/Heizrohre 20 durchströmt. Auf diese Weise kann die Temperierung des Gebäudes 2 vorzugsweise ausschließlich durch das wasserbasierte Kühl-/Heizsystem bei allen Jahreszeiten realisiert werden.

An vorzugsweise zentraler Stelle des Gebäudes 2 ist eine mit dem Bezugszeichen 26 schematisch angedeutete Kühl-/Heizzentrale vorgesehen. Dort wird das im Rücklauf 24 der wasserführenden Verrohrung 18 zurückgeführte Wasser wieder auf die von den Umgebungsbedingungen, insbesondere der Außentemperatur oder auch von weiteren Parametern abhängige Vorlauftemperatur gebracht, um wieder in den Vorlauf 22 des Kreislaufsystems gefördert zu werden. Das wasserbasierte Kühl-/Heizsystem 16 wird durchweg als Niedrigtemperatursystem betrieben, d.h. es wird bei allen typischerweise auftretenden Außentemperaturen von beispielsweise -30°C bis +35°C mit einer Vorlauftemperatur des Wassers zwischen vorzugsweise 15°C und 40°C, insbesondere zwischen 17°C und 33°C gefahren. Da bei einer bevorzugten Verfahrensführung die Rücklauftemperatur des Wassers bei Austritt aus den Betondecken und Rückführung zu der Kühl-/Heizzentrale 26 vorzugsweise um höchstens 5°C von der wiedereinzustellenden Vorlauftemperatur abweicht, muss auf keine konventionellen Heizaggregate oder Kühlaggregate für die Temperierung des Wassers des wasserbasierten Kühl-/Heizsystems 16 zurückgegriffen werden. Es erweist sich vielmehr als vorteilhaft, dass hierfür Wärmetauschereinrichtungen 28 verwendet werden können, die als Wärmetauschermedium auf sogenannte natürliche Energien zurückgreifen. Beispielsweise kann hierfür im Untergrund ein Erdkollektor mit einer sehr großen Leitungslänge unterhalb des Gebäudes verlegt sein, mittels dessen im Kühlbetrieb des Gebäudes Wärme aus dem im Rücklauf 24 zurückgeführten Wasser entnommen oder im Heizbetrieb Wärme an das im Rücklauf 24 zurückgeführte Wasser abgegeben werden kann. Es können auch sogenannte Energiepfähle eingesetzt werden, bei denen im Gegensatz zu typischen Erdkollektoren die Medienführung in vertikalen in Betonstützpfeiler eingegossenen Rohren erfolgt. Für den Kühlbetrieb erweist es sich als besonders vorteilhaft, wenn ein adiabatisches Rückkühlwerk eingesetzt wird, welches vorzugsweise mit aus der Umgebung des Gebäudes entnommener Außenluft arbeitet, die in einer Zerstäubungseinrichtung mit einem Wassersprühnebel beaufschlagt wird, so dass sie infolge der Verdampfung des Wassersprühnebels gekühlt wird und dann zum Wärmetausch mit dem zurückgeführten Wasser genutzt werden kann. Sollte dies nicht hinreichend sein, so kann zusätzlich oder stattdessen auf den erwähnten Erdkollektor oder Energiepfahl umgestellt werden. Dessen ungeachtet können an sich bekannte Wärmepumpen oder natürlich auch konventionelle Kühl-/Heizaggregate verwendet werden. Im Heizbetrieb kann selbstverständlich auch Fernwärme in der Wärmetauschereinrichtung 28 zum Einsatz gelangen.

Zur Belüftung, d. h. zur Frischluftzufuhr in das Gebäudes 2, ist außerdem ein von dem wasserbasierten Kühl-/Heizsystem 16 entkoppeltes und separates luftführendes Rohrsystem 30 mit einem zuluftführenden Teil 32 und einem abluftführenden Teil 34 vorgesehen. Das luftführende Rohrsystem 30 umfasst eine Vielzahl von einem jeweiligen Innenraum 10 zugeordneten und wenigstens 4 m langen Abschnitten 36 des zuluftführenden Teils 32 des Rohrsystems 30, die in die Betondecke 4 des jeweiligen Innenraums 10 einbetoniert sind und über eine jeweilige Einströmöffnung 38 in den betreffenden Innenraum 10 münden. Bei der dem Gebäude 2 und dessen Innenräumen 10 zuzuführenden Frischluft handelt es sich um 100 % frische Außenluft, also nicht um Mischluft. Diese zuzuführende Frischluft wird aus der Umgebung des Gebäudes 2 angesaugt (Bezugszeichen 39) und einer wiederum beispielhaft an zentraler Stelle des Gebäudes 2 vorgesehenen Wärmetauschereinrichtung 40 zugeführt, wo eine thermische Kopplung mit der im abluftführenden Teil 34 des luftführenden Rohrsystems 30 strömenden Abluft ausgeführt und damit eine Vortemperierung der den Innenräumen 10 zuzuführenden Frischluft durchgeführt wird. Bei der Wärmetauschereinrichtung 40 kann es sich beispielsweise um einen Plattenwärmetauscher handeln, der nachfolgend noch erläutert werden wird. Die von außen zugeführte und in der Wärmetauschereinrichtung 40 vortemperierte Frischluft wird über den zuluftführenden Teil 32 des luftführenden Rohrsystems 30 in typischerweise vertikalen Steigsträngen den einzelnen Geschossen zugeführt, wo insbesondere ein horizontaler in einem abgehängten Deckenbereich vorgesehener Zuluftkanal 42 geschossweise vorgesehen sein kann. Von diesem horizontalen Zuluftkanal 42 ausgehend führen die schon erwähnten Abschnitte 36 weg, die in die Betondecke 4 einbetoniert sind und über eine jeweilige Einströmöffnung 38 in den betreffenden Innenraum 10 münden. Ferner ist ersichtlich, dass in dem jeweiligen Innenraum 10 eine Ausströmöffnung 44 für die Abluft vorgesehen ist, die über einen verhältnismäßig kurzen Abschnitt in einen im beispielhaften Fall parallel zu dem horizontalen Zuluftkanal verlaufenden horizontalen Abluftkanal 46 führt.

Es hat sich gezeigt, dass auch bei Verwendung einfachster glatter handelsüblicher Kunststoffrohre zur Ausbildung der einbetonierten Abschnitte 36 bei einer Abschnittslänge von nur wenigstens 4 m eine Temperierung der den Innenräumen 10 zuzuführenden Frischluft auf im Wesentlichen die Temperatur der wassergekühlten bzw. wassererwärmten Betondecke 4 realisierbar ist, so dass die in die Innenräume 10 einströmende Frischluft nicht als unangenehm kalt oder warm empfunden wird. Die durch die einbetonierten Abschnitte 36 geführte und in den jeweiligen Innenraum eingeleitete Frischluft wird dabei auf die Temperatur der wassertemperierten Betondecke 4 erwärmt oder gekühlt; ihre Temperatur liegt dann typischerweise zwischen der Temperatur des in der Decke geführten Wassers und der Deckenabstrahlungstemperatur, je nachdem wo und wie die luftführenden Abschnitte 36 des zuluftführenden Teils 32 des Rohrsystems 30 in Bezug auf die wasserführenden Kühl-/Heizrohre 20 des wasserbasierten Kühl-/Heizsystems 16 innerhalb der Betondecke 4 geführt sind. Die aus den Innenräumen 10 abgeführte Abluft wird mit der typischen Raumtemperatur der Innenräume 10 entnommen und über den abluftführenden Teil 34 zu der Wärmetauschereinrichtung 40 geführt und danach an die Umgebung des Gebäudes ausgeblasen (Bezugszeichen 48).

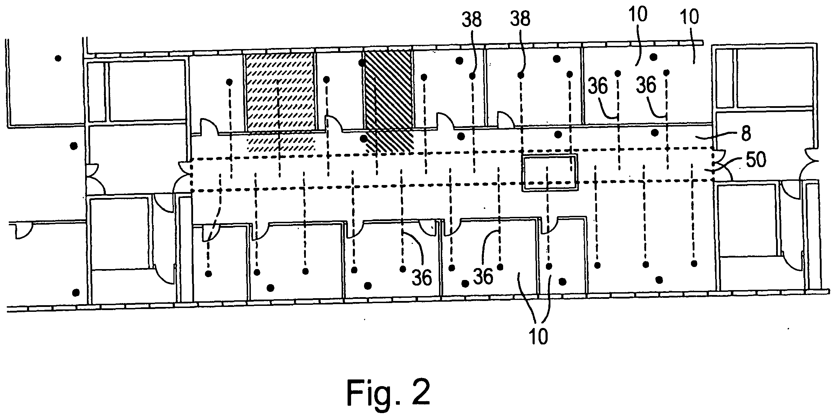

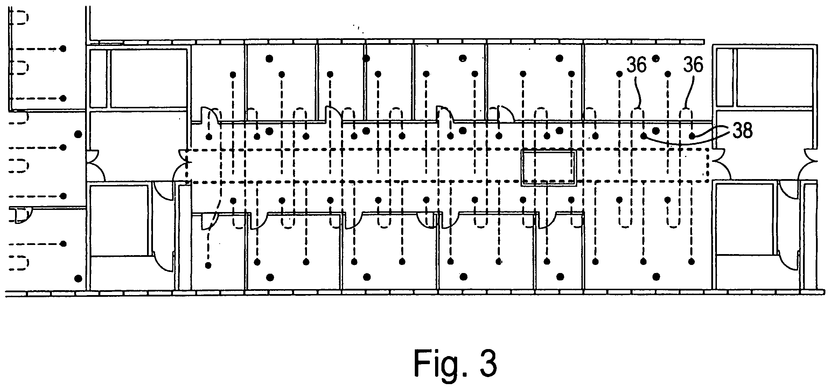

Die Figuren 2 und 3 zeigen in schematischer Aufsicht eine beispielhafte Einteilung eines Geschosses eines Bürogebäudes mit einem Flur bzw. einer Mittelzone 8, von der beidseits Innenräume 10 als Büroräume ausgehen. Der punktiert dargestellte Bereich bezeichnet einen abgehängten Deckenbereich 50, in dem horizontal verlaufend ein Zuluftkanal und ein Abluftkanal vorgesehen ist. Die gestrichelten Linien bezeichnen einen jeweiligen zuluftführenden Abschnitt 36, der in die Betondecke 4, so wie im Zusammenhang mit Figur 1 erläutert, einbetoniert ist und über eine jeweilige Einströmöffnung 38 in die jeweiligen Innenräume 10 mündet. Im beispielhaft dargestellten Fall verfügt die etwa 400 m² Nutzfläche umfassende Büroetage über insgesamt 20 solcher nur 4 bis 5 m langen Abschnitte 36 für die Zufuhr von im Wesentlichen auf die Temperatur der Betondecken 4 durch Wärmeaustausch mit den Betondecken temperierte Zuluft. Die Rohrlänge der in die Betondecke einbetonierten Abschnitte 36 des zuluftführenden Teils 32 des Rohrsystems 30 je Fläche der Betondecke bzw. Nutzfläche der Etage beträgt bei Zugrundelegung einer Abschnittslänge von 5 m nur 25 m Rohrlänge je 100 m² Nutzfläche.

Figur 3 zeigt eine Figur 2 entsprechende schematische Darstellung, bei der nicht nur den einzelnen Büroräumen Frischluft zugeführt wird, sondern auch der beispielsweise als Multifunktionszone ausgebildeten Mittelzone 8. Hierfür ist eine doppelte Anzahl von in die Betondecken einbetonierten Abschnitten 36 des zuluftführenden Teils 32 des Rohrsystems 30 vorgesehen, die im beispielhaft dargestellten Fall dieselbe Länge wie die in Figur 2 dargestellten Rohrabschnitte 36 haben, jedoch in einem 180°-Bogen geführt sind, so dass sie über eine entsprechende Länge in den Betondecken verlaufen, um die zuzuführende Frischluft auf die Deckentemperatur zu bringen, jedoch in der Mittelzone 8 über entsprechende Einströmöffnungen 38 münden.

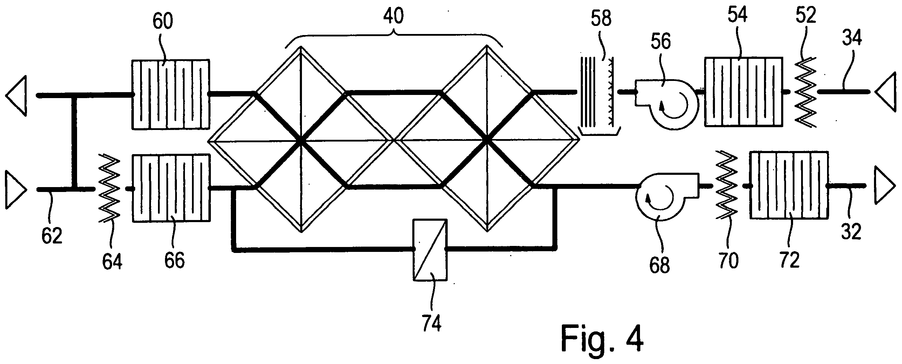

Nachfolgend wird anhand von Figur 4 eine beispielhafte Wärmetauschereinrichtung 40 für die Vortemperierung der dem Gebäude zuzuführenden Frischluft erläutert, und zwar unter beispielhafter Zugrundelegung eines Kühlbetriebs. Ausgehend von dem abluftführenden Teil 34 des luftführenden Rohrsystems 30 ist in Strömungsrichtung von der Wärmetauschereinrichtung 40 ein Filtermittel 52, eine Schalldämpfereinrichtung 54 sowie eine Gebläseeinrichtung 56, vorzugsweise mit einer Volumenstromregelvorrichtung vorgesehen. Daran schließt sich eine Befeuchtungseinrichtung 58 an, innerhalb derer die in Richtung auf die Wärmetauschereinrichtung 40 geführte Abluft mit einem Sprühnebel aus Wasser beaufschlagt wird. Infolge der Verdampfung des Wassers kühlt die Abluft hierbei ab, beispielsweise von 26°C auf Temperaturen deutlich unterhalb von 20°C. Diese kalte Abluft wird dann der Wärmetauschereinrichtung 40 zugeführt, bei der es sich vorteilhafterweise um eine Plattenwärmetauschereinrichtung handeln kann. Die Abluft wird durch eine weitere Schalldämpfereinrichtung 60 geführt und dann an die Umgebung des Gebäudes ausgeblasen.

Quasi im Gegenstrom hierzu wird aus der Umgebung des Gebäudes Außenluft bei Bezugszeichen 62 aufgenommen, durch ein Filtermittel 64 und eine Schalldämpfereinrichtung 66 geleitet und dann im Gegenstrom zu der Abluft durch die Wärmetauschereinrichtung 40 geleitet, wo die warme Außenluft dann beispielsweise auf Temperaturen zwischen 18 und 22° gekühlt wird. Sie wird mittels einer weiteren Gebläseeinrichtung 68 und durch ein weiteres Filtermittel 70 und eine weitere Schalldämpfereinrichtung 72 dem zuluftführenden Teil 32 des Rohrsystems 30 und schließlich als vortemperierte Frischluft den in die Decken 4 einbetonierten Abschnitten 36 zugeführt, wo dann die schlussendliche Temperierung auf die Deckentemperatur stattfindet. Die vorstehend beschriebene Befeuchtungseinrichtung 58 bildet zusammen mit der Wärmetauschereinrichtung 40 ein adiabatisches Rückkühlwerk.

Im Heizbetrieb, wenn also die im abluftführenden Teil 34 zurückgeführte Abluft typischerweise kälter ist als die Solltemperatur der den Innenräumen zuzuführenden Frischluft, wird die Befeuchtungseinrichtung 58 nicht betrieben, sondern in diesem Fall dient lediglich die Wärmetauschereinrichtung 40 zur Vortemperierung der dann typischerweise sehr kalten Außenluft, die bei Bezugszeichen 62 zur Frischluftzufuhr angesaugt wird. Lediglich optional dargestellt ist bei Bezugszeichen 74 eine in einem Bypass geschaltete Nachwärmeinrichtung vorgesehen, die aber auch in Reihe nach der Wärmetauschereinrichtung 40 vorgesehen sein könnte.

Die für die Kühlung des Wassers des wasserbasierten Kühl-/Heizsystems 16 vorgesehene Wärmetauschereinrichtung 28 ist vorzugsweise prinzipiell in entsprechender Weise als adiabatisches Rückkühlwerk mit einer entsprechenden Befeuchtungseinrichtung ausgebildet, bei der jedoch von der Umgebung des Gebäudes Außenluft angesaugt und entsprechend mit einem Sprühnebel beaufschlagt wird. Die angesaugte Außenluft ist mit Bezugszeichen 76 in Figur 1 angedeutet.

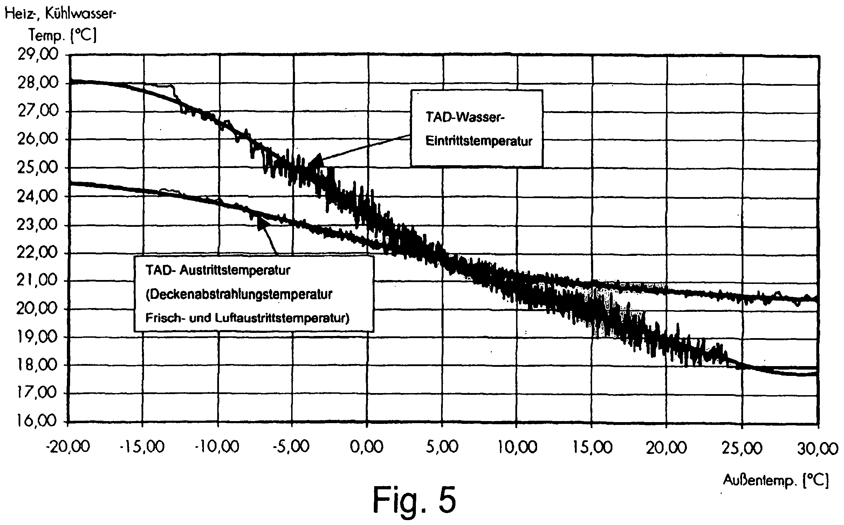

Figur 5 verdeutlicht die Solltemperatur im Vorlauf 22 des wasserbasierten Kühl-/Heizsystems 16, d.h. die Wassereintrittstemperatur in die wassergekühlte thermisch aktivierte Decke (TAD), und die Wasseraustrittstemperatur aus der thermisch aktivierten Decke im Rücklauf 24 des wasserbasierten Kühl-/Heizsystems 16, jeweils in Abhängigkeit der Außentemperatur aufgetragen von -20°C bis +30°C. Man erkennt, dass im beispielhaft dargestellten Fall ein Kühlbetrieb ab +5°C Außentemperatur gefahren wird, was tatsächlich den typischen Gegebenheiten entspricht.

In den am Ende der Beschreibung dargestellten Tabellen I, II und III sind typische Betriebsparameter (Temperatur) im wasserbasierten Kühl-/Heizsystem 16 (links) und im luftführenden Rohrsystem 30 (rechts) dargestellt.

Beispielsweise wird das Wasser im wasserbasierten Kühl-/Heizsystem 16 bei Außentemperaturen von -18°C (Tabelle I) in der Wärmetauschereinrichtung 28 auf Vorlauftemperaturen von beispielhaft ca. 30°C erwärmt und den Betondecken 4 zugeführt. Hierbei ergibt sich eine typische Deckenabstrahlungstemperatur von 24°C, und das Wasser verlässt die thermisch aktivierte Decke, also die in die Betondecke einbetonierten Heiz-/Kühlrohre 20 mit einer Temperatur von typischerweise ca. 26°C. Das Wasser wird im Kreislauf zurückgeführt und wiederum der Wärmetauschereinrichtung 28 zugeführt.

In diesem dargestellten Heizbetrieb bei Außentemperaturen von -18°C wird Außenluft als Frischluft mit eben dieser Außentemperatur von -18°C angesaugt und in der Wärmetauschereinrichtung 40 durch thermische Kopplung mit zurückgeführter Abluft, die dann an die Umgebung des Gebäudes abgegeben wird, auf typischerweise etwa 15°C vortemperiert. Sie durchläuft den zuluftführenden Teil 32 und erfährt beim Durchströmen der jeweiligen einbetonierten Rohrabschnitte 36 eine Erwärmung auf im Wesentlichen die Temperatur der Betondecke 4. Sie wird also im beispielhaft dargestellten Fall mit typischerweise etwa 24°C in die Innenräume 10 eingeleitet. Abluft wird aus den Innenräumen mit einer Temperatur von typischerweise ca. 22°C abgeführt und über den abluftführenden Teil 34 wieder der Wärmetauschereinrichtung 40 zugeführt und danach an die Umgebung abgegeben.

Die Tabellen II und III zeigen entsprechende typische Betriebsparameter (Temperatur) bei Außentemperaturen von 17°C (Tabelle II) und von 32°C (Tabelle III).

Insgesamt wird die Temperierung des Gebäudes 2, also sowohl die Kühlung als auch die Beheizung vorzugsweise ausschließlich durch das wasserbasierte Kühl-/Heizsystem 16 in Form einer thermisch aktivierten Decke mit in die Decke integrierten Kühl-/Heizrohren 20 ausgeführt. Zur Frischluftzufuhr werden wenigstens 4 m lange Abschnitte des zuluftführenden Teils des hierfür vorgesehenen luftführenden Rohrsystems in die Betondecken einbetoniert. Auf diese Weise kann die zuzuführende Frischluft nach einer Vortemperierung in der Wärmetauschereinrichtung 40 mit im Wesentlichen der Temperatur der wassertemperierten Betondecken in die Innenräume eingeleitet werden. Auf diese Weise ist zugleich eine hinreichende Belüftung für den Betrieb des wasserbasierten Kühl-/Heizsystems 16 in Form der thermisch aktivierten Decken (TAD) realisiert. In extremen Situationen im Sommer kann es angezeigt sein, dass die zuzuführende Frischluft nicht nur vortemperiert, sondern dabei auch entfeuchtet wird. Insgesamt wird durch das erfindungsgemäße System ein Niedrigtemperatursystem geschaffen, das mit einem sehr hohen Behaglichkeitsgrad einhergeht und bei entsprechender Auslegung mit extremer Energieersparnis im Vergleich zu konventionell temperierten Gebäuden einhergeht. Vorteilhafte und bevorzugte Verfahrensparameter für den Betrieb ergeben sich aus den Patenansprüchen und aus dem einleitenden Teil der Beschreibung.

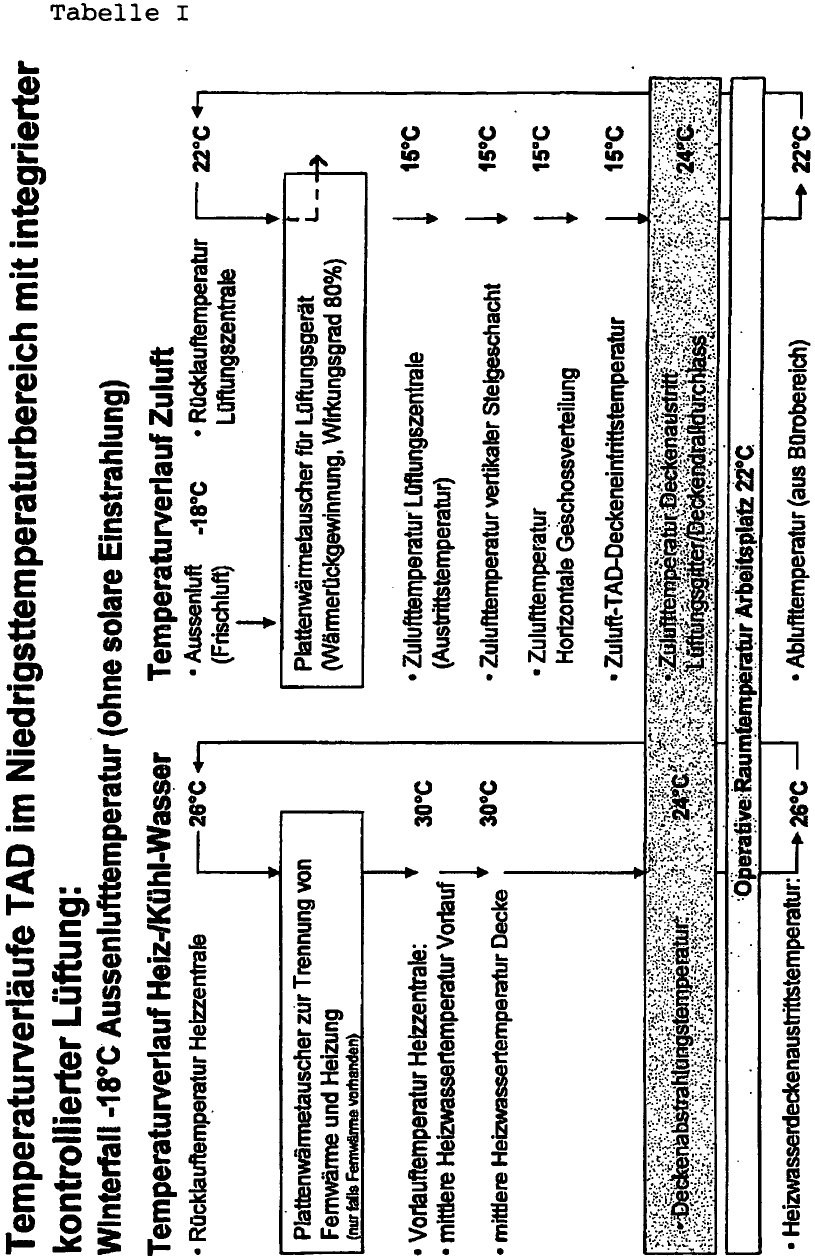

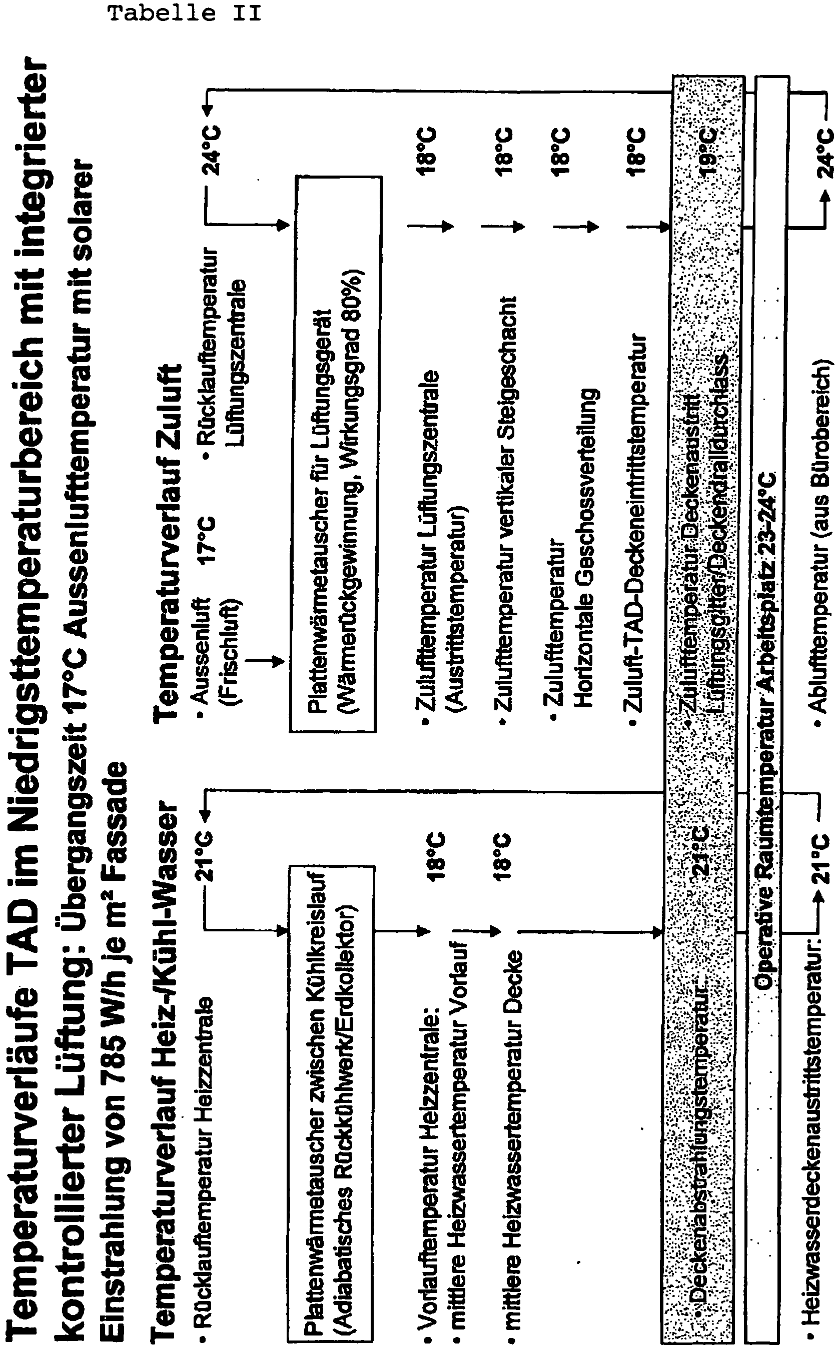

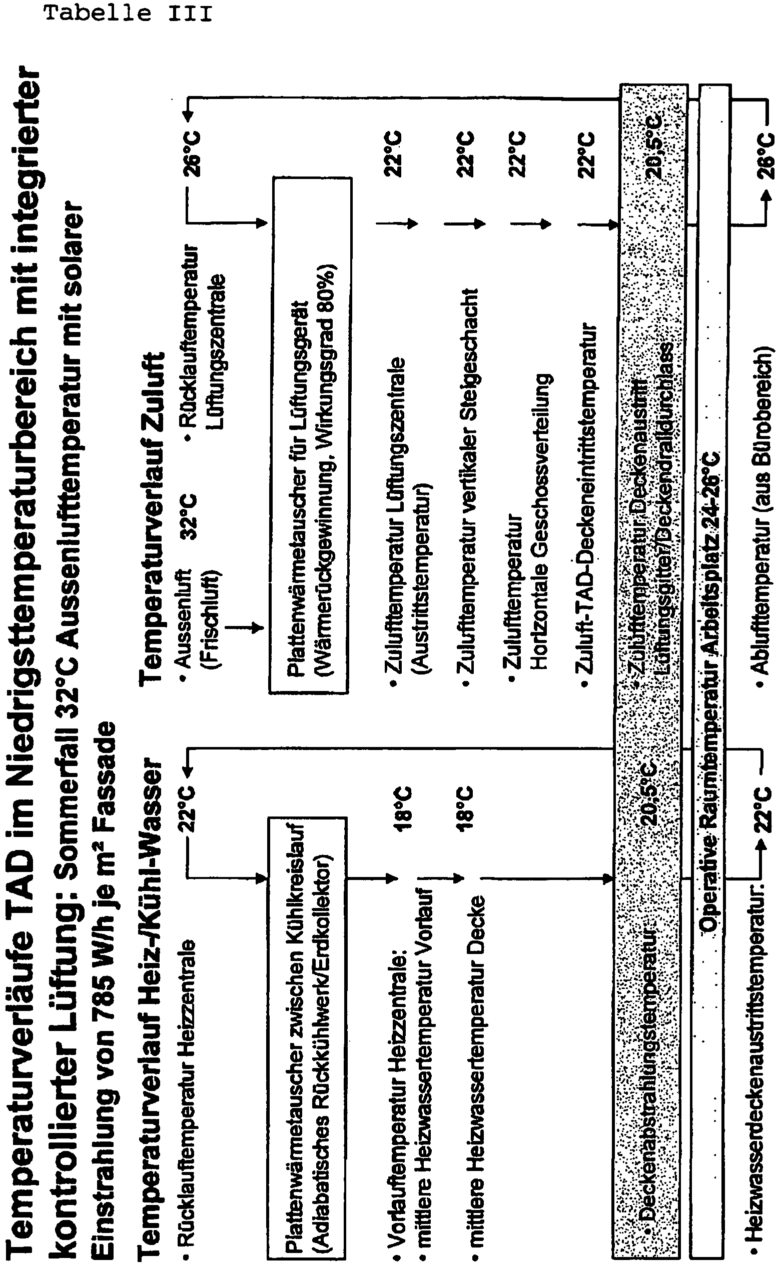

## Patentansprüche

1. Bauwerk (2), insbesondere Bürogebäude, Wohngebäude oder öffentliches Gebäude, mit Betondecken (4), das zur Beheizung und zur Kühlung seiner Innenräume (10) ein in die Betondecken integriertes wasserbasiertes Kühl/Heizsystem (16) als Kreislaufsystem mit in die jeweilige Betondecke (4) einbetonierten Kühl/Heizrohren (20) aufweist, wobei zur Frischluftzufuhr in die Innenräume (10) und zur Abluftabfuhr aus den Innenräumen (10) ein luftführendes Rohrsystem (30) mit einem zuluftführenden Teil (32) und mit einem abluftführenden Teil (34) vorgesehen ist, wobei der zuluftführende Teil (32) und der abluftführende Teil (34) an vorzugsweise zentraler Stelle über eine Wärmetauschereinrichtung (40) miteinander gekoppelt sind, so dass die von außen zugeführte Frischluft hierdurch vortemperiert wird, **dadurch gekennzeichnet, dass** wenigstens ein einem jeweiligen Innenraum (10) zugeordneter und wenigstens 4 m langer Abschnitt (36) des zuluftführenden Teils (32) des Rohrsystems (30) in die Betondecke (4) des jeweiligen Innenraums (10) einbetoniert ist und in den Innenraum (10) über eine Einströmöffnung (38) in der Betondecke (4) mündet, so dass die vortemperierte Frischluft im wesentlichen auf die Temperatur der wassertemperierten Betondecke (4) bringbar und dem zugeordneten Innenraum (10) zuführbar ist.

2. Bauwerk nach Anspruch 1, **dadurch gekennzeichnet, dass** die Rohrlänge der in die Betondecke (4) einbetonierten Abschnitte (36) des zuluftführenden Teils (32) des Rohrsystems (30) je Fläche der Betondecke (4) höchstens 50 m / 100 m², insbesondere 20 - 50 m / 100 m², insbesondere 20 - 40 m / m², insbesondere 20 - 30 m / 100 m² und weiter insbesondere 20 - 25 m / 100 m² beträgt.

3. Bauwerk nach Anspruch 1 oder 2, **dadurch gekennzeichnet, dass** der wenigstens 4 m lange in die Betondecke (4) des jeweiligen Innenraums (10) einbetonierte Abschnitt (36) des zuluftführenden Teils (32) des Rohrsystems (30) von einem im wesentlichen glatten Kunststoffrohr gebildet ist.

4. Bauwerk nach Anspruch 1, 2 oder 3, **dadurch gekennzeichnet, dass** ein Außendurchmesser des wenigstens 4 m langen in die Betondecke (4) des jeweiligen Innenraums (10) einbetonierten Abschnitts (36) des zuluftführenden Teils (32) des Rohrsystems (30) 80 - 150 mm, insbesondere 100 - 150 mm, insbesondere 80 - 130 mm, insbesondere 80 - 120 mm, insbesondere 90 - 120 mm, insbesondere 100 - 120 mm beträgt.

5. Bauwerk nach einem oder mehreren der vorstehenden Ansprüche, **dadurch gekennzeichnet, dass** die Länge des in die Betondecke (4) des jeweiligen Innenraums (4) einbetonierten Abschnitts (36) des zuluftführenden Teils (32) des Rohrsystems (30) 4 - 8 m, insbesondere 4 - 7 m, insbesondere 4 - 6 m und weiter insbesondere 4 - 5 m beträgt.

6. Bauwerk nach einem oder mehreren der vorstehenden Ansprüche, **dadurch gekennzeichnet, dass** ein jeweiliger in die Betondecke (4) einbetonierter Abschnitt (36) des zuluftführenden Teils (32) des Rohrsystems (30) einen einzigen Kanal für die Zuführung der Frischluft bildet.

7. Bauwerk nach einem oder mehreren der vorstehenden Ansprüche, **dadurch gekennzeichnet, dass** einem jeweiligen in die Betondecke (4) einbetonierten Abschnitt (36) des zuluftführenden Teils (32) des Rohrsystems (30) eine Volumenstromregelvorrichtung zugeordnet ist oder dass einer Gruppe solcher Abschnitte, die einem Bereich, insbesondere einem Geschoss oder demselben Raum, zugeordnet sind, eine Volumenstromregelvorrichtung zugeordnet ist.

8. Bauwerk nach einem oder mehreren der vorstehenden Ansprüche, **dadurch gekennzeichnet, dass** am innenraumseitigen Ende der einbetonierten Abschnitte (36) ein Decken-Drall-Durchlass oder Radial-Durchlass als Einströmöffnung (38) in den Innenraum (10) vorgesehen ist.

9. Bauwerk nach einem oder mehreren der vorstehenden Ansprüche, **dadurch gekennzeichnet, dass** die Wärmetauschereinrichtung (40) einen Plattenwärmetauscher umfasst.

10. Bauwerk nach einem oder mehreren der vorstehenden Ansprüche, **dadurch gekennzeichnet, dass** im abluftseitigen Teil (34) des Rohrsystems (30) und der Wärmetauschereinrichtung (40) vorgeordnet eine als adiabatisches Rückkühlwerk arbeitende Befeuchtungseinrichtung (58) für die Abluft vorgesehen ist, die im Kühlungsfall aktivierbar ist und mittels derer die Abluft kühlbar ist, bevor sie der Wärmetauschereinrichtung (40) zugeführt wird.

11. Bauwerk nach einem oder mehreren der vorstehenden Ansprüche, **dadurch gekennzeichnet, dass** zur Einstellung der Vorlauftemperatur des Wassers des in die Betondecke (4) integrierten wasserbasierten Kühl/Heizsystems (16) ein adiabatisches Rückkühlwerk, ein Erdkollektor oder Wärmepfahl oder eine Wärmepumpe vorgesehen ist.

12. Verfahren zum Temperieren und Belüften eines Bauwerks (2) nach einem oder mehreren der vorstehenden Ansprüche, wobei die Beheizung und Kühlung mittels eines in die Betondecken (4) integrierten wasserbasierten Kühl/Heizsystems (16) ausgeführt wird und den Innenräumen (10) zusätzlich Frischluft zugeführt und Abluft abgeführt wird, **dadurch gekennzeichnet, dass** die zuzuführende Frischluft in der Wärmetauschereinrichtung (40) mittels Wärme- oder Kühlleistung aus der abzuführenden Abluft vortemperiert wird und dass die vortemperierte Zuluft durch wenigstens 4 m lange, in die Betondecke einbetonierte Abschnitte (36) des zuluftführenden Teils (32) des Rohrsystems (30) geleitet und dabei auf im wesentlichen die Temperatur der wassertemperierten Betondecke (4) gebracht und dann in einen Innenraum (10) des Bauwerks eingeleitet wird.

13. Verfahren nach Anspruch 12, **dadurch gekennzeichnet, dass** der Zuluftvolumenstrom in einem in einen jeweiligen Innenraum (10) mündenden Abschnitt (36) des zuluftführenden Teils (32) des Rohrsystems (30) 90 - 300 m³/h, insbesondere 90 - 200 m³/h und weiter insbesondere 90 - 150 m³/h beträgt.

14. Verfahren nach Anspruch 12 oder 13, **dadurch gekennzeichnet, dass** die Strömungsgeschwindigkeit der zuzuführenden Zuluft innerhalb der jeweiligen in die Betondecke (4) einbetonierten Abschnitte (36) des zuluftführenden Teils (32) des Rohrsystems (30) < 6m/s, insbesondere < 5m/s und weiter insbesondere < 4m/s ist.

15. Verfahren nach Anspruch 12, 13 oder 14, **dadurch gekennzeichnet, dass** die Strömungsgeschwindigkeit des Wassers innerhalb des in die Betondecken (4) integrierten wasserbasiertes Kühl/Heizsystems (16) 0,1 - 0,7 m/s beträgt.

16. Verfahren nach einem oder mehreren der vorstehenden Ansprüche 12-15, **dadurch gekennzeichnet, dass** die Vorlauftemperatur des Wassers des in die Betondecke (4) integrierten wasserbasierten Kühl/Heizsystems (16) bei allen typischerweise auftretenden Außentemperaturen (von -30°C bis +35°C) zwischen 15°C und 40°, insbesondere zwischen 17°C und 35°C, insbesondere zwischen 17°C und 33°C liegt.

17. Verfahren nach einem oder mehreren der vorstehenden Ansprüche 12-16, **dadurch gekennzeichnet, dass** die Vorlauftemperatur des Wassers des in die Betondecke (4) integrierten wasserbasierten Kühl/Heizsystems (16) bei Außentemperaturen ab 15°C zwischen 15°C und 22°, insbesondere zwischen 15°C und 20°C, insbesondere zwischen 17°C und 20°C liegt.

18. Verfahren nach einem oder mehreren der vorstehenden Ansprüche 12-17, **dadurch gekennzeichnet, dass** die Rücklauftemperatur des Wassers bei Austritt aus den Betondecken (4) und Rückführung zu einer Kühl/Heizzentrale (26) höchstens 5°C, insbesondere höchstens 4°C und weiter insbesondere höchstens 3°C von der in der Heizzentrale wieder einzustellenden Vorlauftemperatur abweicht.

19. Verfahren nach einem oder mehreren der vorstehenden Ansprüche 12-18, **dadurch gekennzeichnet, dass** die Deckenabstrahlungstemperatur bei allen Außentemperaturen zwischen 20°C und 25°C gehalten wird.

20. Verfahren nach einem oder mehreren der vorstehenden Ansprüche 12-19, **dadurch gekennzeichnet, dass** zur Temperierung, also zur Einstellung der Vorlauftemperatur des Wassers des in die Betondecke (4) integrierten wasserbasierten Kühl/Heizsystems (16) ein adiabatisches Rückkühlwerk, ein Erdkollektor oder Wärmepfahl oder eine Wärmepumpe eingesetzt wird.

## Claims

1. A building (2), in particular an office building, residential building or public building, having concrete ceilings (4), comprising a water-based cooling/heating system (16), which is integrated into the concrete ceilings as a circulating system for heating and cooling the internal rooms (10) of the building, and cooling/heating pipes (20) which are concreted into the respective concrete ceiling (4), wherein an air-conveying pipe system (30) comprising a feed air conveying part (32) and an exhaust air conveying part (34) is provided for feeding fresh air into the internal rooms (10) and for discharging exhaust air from the internal rooms (10), wherein the feed air conveying part (32) and the exhaust air conveying part (34) are coupled together preferably at a central point by means of a heat exchanger apparatus (40), so that the fresh air fed in from the exterior is preheated or precooled thereby, **characterized in that** at least one portion (36), which is associated with a respective internal room (10) and is at least 4 m long, of the air-conveying part (32) of the pipe system (30) is concreted into the concrete ceiling (4) of the respective internal room (10) and opens into the internal room (10) via an inflow opening (38) in the concrete ceiling (4), so that the preheated or precooled fresh air can be brought to substantially the temperature of the water temperature-controlled concrete ceiling (4) and can be fed to the associated internal room (10).

2. The building according to claim 1, **characterized in that** the pipe length of the portions (36) of the feed air conveying part (32) of the pipe system (30) concreted into the concrete ceiling (4) is for each surface of the concrete ceiling (4) at most 50 m / 100 m², in particular 20 - 50 m / 100 m², in particular 20 - 40 m / 100 m², in particular 20 - 30 m / 100 m² and more particularly 20 - 25 m / 100 m².

3. The building according to claim 1 or 2, **characterized in that** the at least 4 m long portion (36) of the air-conveying part (32) of the pipe system (30) concreted into the concrete ceiling (4) of the respective internal room (10) is formed by a substantially smooth plastic pipe.

4. The building according to claim 1, 2 or 3, **characterized in that** the external diameter of the at least 4 m long portion (36) of the air-conveying part (32) of the pipe system (30) concreted into the concrete ceiling (4) of the respective internal room (10) is 80 - 150 mm, in particular 100 - 150 mm, in particular 80 - 130 mm, in particular 80 - 120 mm, in particular 90 - 120 mm, in particular 100 - 120 mm.

5. The building according to one or more of the preceding claims, **characterized in that** the length of the portion (36) of the air-conveying part (32) of the pipe system (30) concreted into the concrete ceiling (4) of the respective internal room (4), is 4 - 8 m, in particular 4 - 7 m, in particular 4 - 6 m and more particularly 4 - 5 m.

6. The building according to one or more of the preceding claims, **characterized in that** a respective portion (36) of the air-conveying part (32) of the pipe system (30) concreted into the concrete ceiling (4) forms one single channel for feeding the fresh air.

7. The building according to one or more of the preceding claims, **characterized in that** a volumetric flow control device is associated with a respective portion (36) of the air-conveying part (32) of the pipe system (30) concreted into the concrete ceiling (4), or that a volumetric flow control device is associated with a group of such portions which are associated with an area, in particular a story or the same room.

8. The building according to one or more of the preceding claims, **characterized in that** on the end of the concreted-in portions (36) on the internal room side a ceiling swirl passage or radial passage is provided as an inflow opening (38) into the internal room (10).

9. The building according to one or more of the preceding claims, **characterized in that** the heat exchanger apparatus (40) comprises a plate heat exchanger.

10. The building according to one or more of the preceding claims, **characterized in that** in the part (34) of the pipe system (30) on the exhaust air side and upstream of the heat exchanger apparatus (40) a moistening apparatus (58) operating as an adiabatic re-cooling plant for the exhaust air is provided, which can be activated in the event of cooling and by means of which the exhaust air can be cooled before it is fed to the heat exchanger apparatus (40).

11. The building according to one or more of the preceding claims, **characterized in that** an adiabatic re-cooling plant, an earth collector or heating bar or a heat pump is provided for setting the inflow temperature of the water of the water-based cooling/heating system (16) integrated into the concrete ceiling (4).

12. A method for regulating the temperature of and ventilating a building (2) according to one or more of the preceding claims, wherein the heating and cooling are carried out by means of a water-based cooling/heating system (16) integrated into the concrete ceilings (4) and fresh air is additionally fed to the internal rooms (10) and exhaust air is discharged, **characterized in that** the fresh air to be fed in is preheated or precooled in the heat exchanger apparatus (40) by means of heating or cooling power from the exhaust air to be discharged, and **in that** the preheated or precooled feed air is guided through portions (36) of the feed air conveying part (32) of the pipe system (30) which are at least 4 m long and are concreted into the concrete ceiling and is brought to substantially the temperature of the water temperature-controlled concrete ceiling (4) and is then introduced into an internal room (10) of the building.

13. The method according to claim 12, **characterized in that** the feed air volumetric flow in a portion (36) of the feed air conveying part (32) of the pipe system (30) which opens into a respective internal room (10) is 90 - 300 m³/h, in particular 90 - 200 m³/h and more particularly 90 - 150 m³/h.

14. The method according to claim 12 or 13, **characterized in that** the flow speed of the feed air to be fed in within the respective portions (36) of the feed air conveying part (32) of the pipe system (30) which are concreted into the concrete ceiling (4) is < 6m/s, in particular < 5m/s and more particularly < 4m/s.

15. The method according to claim 12, 13 or 14, **characterized in that** the flow rate of the water inside the water-based cooling/heating system (16) integrated into the concrete ceiling (4) is 0.1 - 0.7 m/s.

16. The method according to one or more of the preceding claims 12-15, **characterized in that** the inflow temperature of the water of the water-based cooling/heating system (16) integrated into the concrete ceiling (4) is any typically occurring external temperature (from -30 °C to +35 °C), between 15 °C and 40°, in particular between 17 °C and 35 °C, in particular between 17 °C and 33 °C.

17. The method according to one or more of the preceding claims 12-16, **characterized in that** the inflow temperature of the water of the water-based cooling/heating system (16) integrated into the concrete ceiling (4) is at external temperatures above 15 °C, between 15 °C and 22 °C, in particular between 15 °C and 20 °C, in particular between 17 °C and 20 °C.

18. The method according to one or more of the preceding claims 12-17, **characterized in that** the return flow temperature of the water at the outlet from the concrete ceilings (4) and returning to a cooling/heating center (26) deviates at most by 5 °C, in particular at most 4 °C and more particularly at most 3 °C from the inflow temperature to be set again in the heating center.

19. The method according to one or more of the preceding claims 12-18, **characterized in that** the temperature radiated from the ceiling is kept between 20 °C and 25 °C at all external temperatures.

20. The building according to one or more of the preceding claims 12-19, **characterized in that** an adiabatic re-cooling plant, an earth collector or heating bar or a heat pump is used for temperature control, i.e. setting the inflow temperature of the water of the water-based cooling/heating system (16) integrated into the concrete ceiling (4).

## Revendications

1. Ouvrage (2), en particulier immeuble de bureaux, immeuble d'habitation ou bâtiment public, comprenant des plafonds en béton (4), qui, pour chauffer et pour refroidir ses intérieurs (10), présente un système de refroidissement/chauffage (16) à base d'eau en tant que système de circulation qui est intégré aux plafonds en béton et comprend des tuyaux de refroidissement/chauffage (20) enrobés en béton dans le plafond en béton (4) respectif, dans lequel une tuyauterie à circulation d'air (30) ayant une partie à circulation d'air amené (32) et une partie à circulation d'air sortant (34) est prévue pour alimenter en air frais les intérieurs (10) et pour évacuer l'air sortant des intérieurs (10), dans lequel ladite partie à circulation d'air amené (32) et ladite partie à circulation d'air sortant (34) sont couplées l'une à l'autre, sur un point de préférence central, par un dispositif échangeur de chaleur (40) de sorte que l'air frais amené de l'extérieur est ainsi pré-tempéré, **caractérisé par le fait qu'**au moins une section (36) de la partie à circulation d'air amené (32) de la tuyauterie (30), section qui est associée à un intérieur (10) respectif et présente une longueur d'au moins 4 m, est enrobée en béton dans le plafond en béton (4) de l'intérieur (10) respectif et débouche dans ledit intérieur (10) via un ouverture d'admission (38) se trouvant dans le plafond en béton (4) de sorte que l'air frais pré-tempéré peut être porté pour l'essentiel à la température du plafond en béton (4) tempéré par eau et peut être amené à l'intérieur (10) associé.

2. Ouvrage selon la revendication 1, **caractérisé par le fait que** la longueur de tuyau des sections (36) enrobées en béton dans le plafond en béton (4), de la partie à circulation d'air amené (32) de la tuyauterie (30) est de 50 m / 100 m² tout au plus, en particulier comprise entre 20 et 50 m / 100 m², en particulier entre 20 et 40 m / 100 m², en particulier entre 20 et 30 m / 100 m² et encore en particulier entre 20 et 25 m / 100 m², par aire du plafond en béton (4).

3. Ouvrage selon la revendication 1 ou 2, **caractérisé par le fait que** la section (36) de la partie à circulation d'air amené (32) de la tuyauterie (30), qui présente une longueur d'au moins 4 m et est enrobée en béton dans le plafond en béton (4) de l'intérieur (10) respectif est constituée par un tuyau en matière plastique pour l'essentiel lisse.

4. Ouvrage selon la revendication 1, 2 ou 3, **caractérisé par le fait qu'**un diamètre extérieur de la section (36) de la partie à circulation d'air amené (32) de la tuyauterie (30), section qui présente une longueur d'au moins 4 m et est enrobée en béton dans le plafond en béton (4) de l'intérieur (10) respectif, est compris entre 80 et 150 mm, en particulier entre 100 et 150 mm, en particulier entre 80 et 130 mm, en particulier entre 80 et 120 mm, en particulier entre 90 et 120 mm, en particulier entre 100 et 120 mm.

5. Ouvrage selon l'une ou plusieurs des revendications précédentes, **caractérisé par le fait que** la longueur de la section (36) de la partie à circulation d'air amené (32) de la tuyauterie (30), qui est enrobée en béton dans le plafond en béton (4) de l'intérieur (10) respectif, est comprise entre 4 et 8 m, en particulier entre 4 et 7 m, en particulier entre 4 et 6 m et encore en particulier entre 4 et 5 m.

6. Ouvrage selon l'une ou plusieurs des revendications précédentes, **caractérisé par le fait qu'**une section (36) respective de la partie à circulation d'air amené (32) de la tuyauterie (30), qui est enrobée en béton dans le plafond en béton (4), forme un seul canal pour l'amenée de l'air frais.

7. Ouvrage selon l'une ou plusieurs des revendications précédentes, **caractérisé par le fait qu'**un dispositif de réglage de débit volumique est associé à une section (36) respective de la partie à circulation d'air amené (32) de la tuyauterie (30), qui est enrobée en béton dans le plafond en béton (4), ou qu'un dispositif de réglage de débit volumique est associé à un groupe de telles sections qui sont associées à une zone, en particulier à un étage ou à la même pièce.

8. Ouvrage selon l'une ou plusieurs des revendications précédentes, **caractérisé par le fait qu'**un passage de plafond à tourbillon ou un passage radial est prévu en tant qu'ouverture d'admission (38) dans l'intérieur (10), à l'extrémité côté intérieur des sections (36) enrobées en béton.

9. Ouvrage selon l'une ou plusieurs des revendications précédentes, **caractérisé par le fait que** le dispositif échangeur de chaleur (40) comprend un échangeur de chaleur à plaques.

10. Ouvrage selon l'une ou plusieurs des revendications précédentes, **caractérisé par le fait qu'**un dispositif d'humidification (58) pour l'air sortant, qui travaille en tant que mécanisme de refroidissement de retour adiabatique, est prévu dans la partie côté air sortant (34) de la tuyauterie (30) et en amont du dispositif échangeur de chaleur (40), dispositif d'humidification qui peut être activé en cas de refroidissement et au moyen duquel l'air sortant peut être refroidi avant qu'il soit amené au dispositif échangeur de chaleur (40).

11. Ouvrage selon l'une ou plusieurs des revendications précédentes, **caractérisé par le fait que**, pour régler la température d'aller de l'eau du système de refroidissement/chauffage (16) à base d'eau intégré au plafond en béton (4), on prévoit un mécanisme de refroidissement de retour adiabatique, un serpentin enfoui ou un pieu thermique ou une pompe à chaleur.

12. Procédé pour tempérer et aérer un ouvrage (2) selon l'une ou plusieurs des revendications précédentes, dans lequel le chauffage et le refroidissement est réalisé au moyen d'un système de refroidissement/chauffage (16) à base d'eau qui est intégré aux plafonds en béton (4), et dans lequel, en sus, de l'air frais est amené aux intérieurs (10) et de l'air sortant est évacué de ceux-ci, **caractérisé par le fait que** l'air frais à amener est pré-tempéré dans le dispositif échangeur de chaleur (40) au moyen de puissance thermique ou frigorifique provenant de l'air sortant à évacuer, et que l'air amené pré-tempéré est conduit à travers des sections (36) de la partie à circulation d'air amené (32) de la tuyauterie (30), qui présentent une longueur d'au moins 4 m et sont enrobées en béton dans le plafond en béton, et est, durant cela, porté pour l'essentiel à la température du plafond en béton (4) tempéré par eau et est ensuite introduit dans un intérieur (10) de l'ouvrage.

13. Procédé selon la revendication 12, **caractérisé par le fait que** le débit volumique d'air amené dans une section (36) de la partie à circulation d'air amené (32) de la tuyauterie (30), qui débouche dans un intérieur (10) respectif, est compris entre 90 et 300 m³/h, en particulier entre 90 et 200 m³/h et encore en particulier entre 90 150 m³/h.

14. Procédé selon la revendication 12 ou 13, **caractérisé par le fait que** la vitesse d'écoulement de l'air amené à amener, à l'intérieur des sections (36) respectives de la partie à circulation d'air amené (32) de la tuyauterie (30), enrobées en béton dans le plafond en béton (4), est < 6 m/s, en particulier < 5 m/s et encore en particulier < 4 m/s.

15. Procédé selon la revendication 12, 13 ou 14, **caractérisé par le fait que** la vitesse d'écoulement de l'eau à l'intérieur du système de refroidissement/chauffage (16) à base d'eau intégré aux plafonds en béton (4), est comprise entre 0,1 et 0,7 m/s.

16. Procédé selon l'une ou plusieurs des revendications précédentes 12 à 15, **caractérisé par le fait que**, à toutes les températures extérieures se présentant typiquement (de -30 °C à +35 °C), la température d'aller de l'eau du système de refroidissement/chauffage (16) à base d'eau intégré au plafond en béton (4) est comprise entre 15 °C et 40 °C, en particulier entre 17 °C et 35 °C, en particulier entre 17 °C et 33 °C.

17. Procédé selon l'une ou plusieurs des revendications précédentes 12 à 16, **caractérisé par le fait que**, à des températures extérieures à partir de 15 °C, la température d'aller de l'eau du système de refroidissement/chauffage (16) à base d'eau intégré au plafond en béton (4) est comprise entre 15 °C et 22 °C, en particulier entre 15 °C et 20 °C, en particulier entre 17 °C et 20 °C.

18. Procédé selon l'une ou plusieurs des revendications précédentes 12 à 17, **caractérisé par le fait que** la température de retour de l'eau, à la sortie des plafonds en béton (4) et lors du retour vers une centrale de refroidissement/chauffage (26), est différent de 5 °C au plus, en particulier de 4 °C au plus et encore en particulier de 3 °C au plus, de la température d'aller à régler à nouveau dans la centrale de chauffage.

19. Procédé selon l'une ou plusieurs des revendications précédentes 12 à 18, **caractérisé par le fait que**, à toutes les températures extérieures, la température de rayonnement du plafond est maintenue entre 20 °C et 25 °C.

20. Procédé selon l'une ou plusieurs des revendications précédentes 12 à 19, **caractérisé par le fait que**, pour tempérer, donc pour régler la température d'aller de l'eau du système de refroidissement/chauffage (16) à base d'eau intégré au plafond en béton (4) met en oeuvre un mécanisme de refroidissement de retour adiabatique, un serpentin enfoui ou un pieu thermique ou une pompe à chaleur.
